# EUROPÄISCHE PATENTANMELDUNG

(11) **EP 0 733 432 A1**
(43) Veröffentlichungstag der Anmeldung: **25.09.1996**
(21) Anmeldenummer: 96104245.4
(22) Anmeldetag: 18.03.1996
(51) Int. Cl.: B23H 7/30, B23H 1/10

(54) **Anordnung zum Funkenerodieren**

(30) Priorität: 23.03.1995 DE 29504948 U
(71) Anmelder: SIEMENS AKTIENGESELLSCHAFT, 80333 München (DE)
(72) Erfinder: Dotzler, Gerhard, 90431 Nürnberg (DE)

(57) **Zusammenfassung**

Solche Anordnungen haben eine Elektrode als Erodierwerkzeug, die auf einem zugehörigen Elektrodenträger befestigt ist, und ein Spülsystem zur Spülung der zu bearbeitenden Werkstückfläche. Gemäß der Erfindung ist das Werkzeug (10) als Hohlelektrode (11) mit erstem Hohlraum (12) vorgegebenem Innendurchmessers (a) ausgebildet und hat der von der Hohlelektrode (11) separierte Elektrodenträger (21) einen zweiten Hohlraum (22) vorgegebenem Durchmessers (b). Die beiden Hohlräume (12, 22) sind über einen beweglichen Kolben (51) verbunden. Da die Spülflüssigkeit einerseits dem Hohlraum (12) in der Hohlelektrode (11) und andererseits dem Hohlraum (22) in dem Elektrodenträger (21) zugeführt wird, welche über den beweglichen Kolben (51) verbunden sind, läßt sich durch eine geeignete Dimensionierung der Querschnitte (a, b) und der Durchflußmengen ein Kräftegleichgewicht oder auch eine Andruckkraft der Werkzeuganordnung an das Werkstück (100) erreichen.

## Beschreibung

Die Erfindung bezieht sich auf eine Anordnung zum Funkenerodieren mit einer Elektrode als Erodierwerkzeug, die auf einem zugehörigen Elektrodenträger befestigt ist.

Bei der funkenerosiven Bearbeitung von Werkstücken ist stets für eine gute Spülung der zu bearbeiteten Werkstückfläche zu sorgen. Dies gilt einerseits, um die anfallenden Materialpartikel, d.h. den sogenannten Erodierschlamm, gut von den Oberflächen sowohl der Elektrode als auch des Werkstückes abzuspülen und andererseits, um einen einwandfreien Zufluß von frischem bzw. gereinigtem Dielektrikum zu gewährleisten. Da hierzu ein gewisser Druck der Spülflüssigkeit notwendig ist, entstehen dadurch besonders bei großen zu bearbeitenden Werkstückflächen unerwünschte Kräfte, die entgegen dem Pinolenhub der Erodiervorrichtung wirken. Diese Kräfte haben einen ungünstigen Einfluß auf das im Gleichgewicht befindliche Erodiersystem bzw. auf den eigentlichen Erodiervorgang.

Besonders beim Erodieren mit Elektroden, die aus Zugänglichkeitsgründen an Auslegern mit langen Hebelarmen montiert sind, treten darüber hinaus auch Vibrationen des Systems auf, die das Erodierergebnis negativ beeinflussen können. Es ergibt sich ein unstabiler Maschinenlauf, der eine schlechte Oberflächenqualität des Werkstückes und/oder lange Bearbeitungszeiten od.dgl. zur Folge haben kann.

Beim Stand der Technik hat man bereits versucht, die vorstehend beschriebenen Probleme durch aufwendige, voluminöse und schwere Bauteile für die Elektroden zu vermindern. Aufgabe der Erfindung ist es demgegenüber, eine Anordnung der eingangs genannten Art zu schaffen, bei der mit genügend hohem Spüldruck gearbeitet werden kann und gleichzeitig die geschilderten unerwünschten Einflüsse minimiert bzw. eliminiert sind.

Die Aufgabe ist erfindungsgemäß durch die Kombination folgender Merkmale gelöst:
- Die Elektrode ist als Hohlelektrode mit erstem Hohlraum vorgegebenem Innendurchmessers ausgebildet,
- im von der Hohlelektrode separierten Elektrodenträger ist ein zweiter Hohlraum vorgegebenenem Durchmessers vorhanden,
- der Hohlraum der Hohlelektrode und der Hohlraum des Elektrodenträgers sind über einen beweglichen Kolben verbunden,
- die Spülflüssigkeit wird sowohl dem Hohlraum in der Hohlelektrode als auch dem Hohlraum in dem Elektrodenträger zugeführt,
- die Spülflüssigkeit fließt einerseits über den zwischen Hohlelektrode und Werkstück gebildeten Erodierspalt und andererseits über einen Ablauf im Hohlraum des Elektrodenträgers ab.

Bei der Erfindung ist vorteilhafterweise der Durchmesser des Hohlraums im Elektrodenträger wenigstens gleich dem Durchmesser des Hohlraums in der Hohlelektrode. Durch Festlegung des Durchmessers des Hohlraumes im Elektrodenträger ergibt sich unter Berücksichtigung der mechanischen Trägheit aller Bauteile eine definierte Andruckkraft des gesamten Erodierwerkzeuges an das Werkstück. Vorzugsweise gelangt bei der Erfindung die Erodierflüssigkeit über einen weiteren zwischengeschalteten Hohlraum und zugehörige Bypassverbindungen in den Hohlraum der Hohlelektrode einerseits und den Hohlraum im Elektrodenträger andererseits.

Weitere Einzelheiten und Vorteile der Erfindung ergeben sich aus der nachfolgenden Figurenbeschreibung eines Ausführungsbeispiels in Verbindung mit den Schutzansprüchen. Es zeigen:
- FIG 1: eine Erodiervorrichtung mit Ausleger in schematischer Darstellung und
- FIG 2: eine dabei verwendete Anordnung mit Elektrode und Spülsystem.

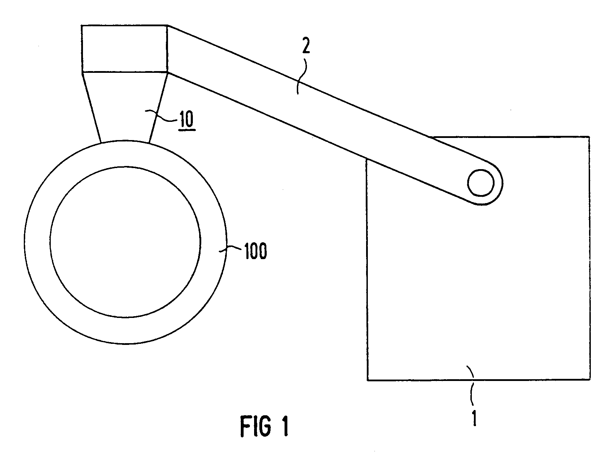

In FIG 1 ist ein Betriebsgerät zur Funkenerosion mit 1 bezeichnet. Zum Senkerodieren von solchen Werkstückflächen, die schwierig zugänglich sind, beispielsweise von betriebsmäßig eingebauten Rohren od.dgl., hat das Betriebsgerät einen Ausleger 2 mit vergleichsweise langem Hebelarm, an dem ein Werkzeug 10 zum Erodieren angelenkt ist. Das Werkzeug 10 besteht aus einer Elektrode mit zugehörigem Spülsystem und ist über den Ausleger 2 sowohl elektrisch als auch hydraulisch mit dem Betriebsgerät 1 verbunden. Das Erodierwerkzeug 10 sitzt auf einem Werkstück 100 auf. Ein unter Druck stehendes Fluid dient beim Erodieren in bekannter Weise einerseits als Dielektrikum und andererseits als Spülflüssigkeit zum Wegspülen der bei der Bearbeitung anfallenden Materialpartikel.

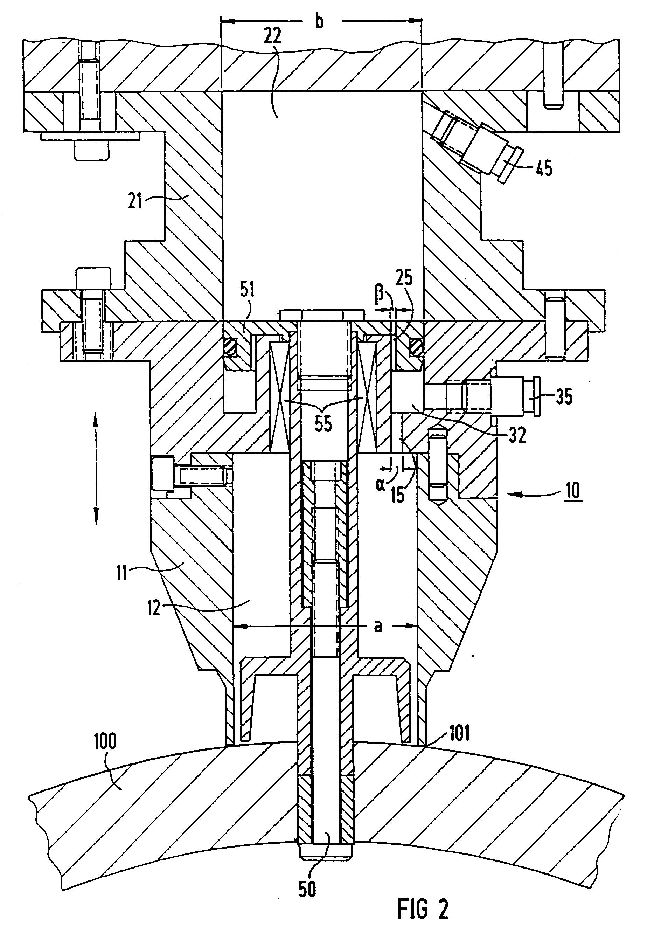

In der Figur 2 ist ein zur speziellen Bearbeitung von metallischen Rohren, beispielsweise Stahlrohren, verwendbares Erodierwerkzeug 10 im einzelnen dargestellt, wobei in die Außenkontur des Rohres als zu bearbeitendes Werkstück 100 eine Abzweigöffnung eingebracht werden soll. Das Werkzeug 10 besteht aus einer Hohlelektrode 11 mit einem Innendurchmesser a, so daß ein erster Hohlraum 12 umschlossen ist. Die Hohlelektrode 11 ist mit einem Elektrodenträger 21 verbunden, der am Ausleger 2 des Betriebsgerätes 1 gemäß FIG 1 befestigt ist. Gegebenenfalls kann der Elektrodenträger 21 auch direkt mit der Erodiermaschine am Betriebsgerät 1 verbunden sein.

Im Elektrodenträger 21 ist ein zweiter Hohlraum 22 mit Durchmesser b eingebracht. Im Hohlraum 22 befindet sich ein beweglicher Kolben 51, der einen Ankerbolzen 50 zur Abstützung am Werkstück 100 trägt. Die Anordnung aus Ankerbolzen 50 und Kolben 51 ist über ein Längslauflager 55 gegenüber dem Werkzeug 10 verschiebbar.

Über einen Zulauf 35 gelangt die dielektrische Flüssigkeit unter Druck in einen als Zwischenraum 32 ausgebildeten Ringzylinder 31 und von dort ein erstes Teil über eine Bypassbohrung 15 mit Durchmesser α in die Hohlelektrode 11 mit Hohlraum 12. Unter Wirkung als Dielektrikum tritt die Spülflüssigkeit über den Erodierspalt 101 am Werkstück 100 unter Mitnahme der Erodierpartikel wieder aus.

Ein weiterer Teil der Spülflüssigkeit geht über den Zwischenraum 32 und eine weitere Bypassbohrung 25 mit Durchmesser β in den über dem Kolben 51 liegenden Zylinderraum 22 und tritt über eine Ablaufbohrung 45 aus.

Bei einer Anordnung gemäß Figur 2 erzeugt die im Hohlraum 12 unter Druck stehende Spülflüssigkeit über die Fläche mit Durchmesser a eine Kraft F_{A}, die das Werkzeug 10 vom Werkstück 100 wegdrückt. Da im Hohlraum 22 des Elektrodenträgers 21 der gleiche Druck ansteht, entsteht über die Fläche mit Durchmesser b ebenfalls eine Kraft F_{B}, die der Kraft F_{A} entgegenwirkt.

Durch eine gezielte Auswahl der Durchmesser a und b können die entstehenden Kräfte derart festgelegt werden, daß sie gezielt in eine Richtung wirken oder sich gegebenenfalls gerade aufheben. Im allgemeinen wird zur Generierung eine Andruckkraft der Durchmesser b wenigstens gleich dem Durchmesser a gewählt.

Zum Erreichen einer gewissen Trägheit der gesamten Werkzeuganordnung erfolgt der Zulauf in den Hohlraum 12 der Hohlelektrode nicht direkt, sondern über die Bypassbohrung 15 mit Durchmesser α. Um mögliche Vibrationen des gesamten Systems auszuschalten, ist der Volumenstrom vom Zwischenraum 32 zum Raum 22 über die Bypassbohrung 25 mit Durchmesser β gedrosselt, wodurch eine Bedämpfung des Systems bewirkt wird.

Im Rahmen von Versuchen können jeweils für ein vorgegebenes Erodierproblem die einzelnen Durchflußquerschnitte, d.h. der Durchmesser von Zulauf, der Bypassbohrungen und des Ablaufes, auseinander abgestimmt werden. Dadurch kann ein optimales Verhalten der gesamten Anordnung erzeicht werden.

## Patentansprüche

1. Anordnung zum Funkenerodieren, mit einer Elektrode als Erodierwerkzeug, die auf einem zugehörigen Elektrodenträger befestigt ist, und mit einem Spülsystem zur Spülung der zu bearbeitenden Werkstückfläche, **gekennzeichnet** durch folgende Merkmale:
- Die Elektrode ist als Hohlelektrode (11) mit erstem Hohlraum (12) vorgegebenem Innendurchmessers (a) ausgebildet,
- im von der Hohlelektrode (11) separierten Elektrodenträger (21) ist ein zweiter Hohlraum (22) vorgegebenenem Durchmessers (b) vorhanden,
- der Hohlraum (12) der Hohlelektrode (11) und der Hohlraum (22) des Elektrodenträgers (21) sind über einen beweglichen Kolben (31) miteinander verbunden,
- die Spülflüssigkeit wird sowohl dem ersten Hohlraum (12) in der Hohlelektrode (11) als auch dem zweiten Hohlraum (22) in dem Elektrodenträger (21) zugeführt,
- die Spülflüssigkeit fließt einerseits über den zwischen Hohlelektrode (11) und Werkstück (100) gebildeten Erodierspalt (101) und andererseits über einen Ablauf (25) im Hohlraum (22) des Elektrodenträgers (21) ab.

2. Anordnung nach Anspruch 1, **dadurch gekennzeichnet,** daß ein weiterer Hohlraum (32) zwischen den ersten Hohlraum (12) in der Holelektrode (11) und dem zweiten Hohlraum (22) im Elektrodenträger (21) vorhanden ist, über den die Spulflüssigkeit den ersten und zweiten Hohlräumen (12,22) zugeführt wird.

3. Anordnung nach Anspruch 1**, dadurch gekennzeichnet,** daß der Durchmesser (b) des Hohlraumes (22) im Elektrodenträger (21) wenigstens gleich dem Durchmesser (a) des Hohlraumes (12) in der Hohlelektrode (11) ist.

4. Anordnung nach Anspruch 2, **dadurch gekennzeichnet,** daß der Durchmesser (b) des Hohlraumes (22) im Elektrodenträger (21) so derart festgelegt wird, daß unter Berücksichtigung der mechanischen Trägheit aller Bauteile (1 bis 10) sich eine Andruckkraft des gesamten Erodierwerkzeuges (10) an das Werkstück (100) ergibt.

5. Anordnung nach Anspruch 1, **dadurch gekennzeichnet,** daß die Erodierflüssigkeit vom Zwischenraum (32) über Bypass-Verbindungen (35, 34) in den Hohlraum (12) der Hohlelektrode (11) einerseits und den Hohlraum (22) im Elektrodenträger (21) gelangt.

6. Anordnung nach Anspruch 1, **dadurch gekennzeichnet,** daß vom Elektrodenträger (21) über die Hohlelektrode (11) ein Ankerbolzen (50) zur Verbindung des Erodierwerkzeuges (10) mit dem Werkstück (100) vorhanden ist.
